# EUROPÄISCHE PATENTSCHRIFT

(11) **EP 3 485 108 B1**
(45) Veröffentlichungstag und Bekanntmachung des Hinweises auf die Patenterteilung: **27.05.2020**
(21) Anmeldenummer: 17748652.9
(22) Anmeldetag: 12.07.2017
(51) Int. Cl.: B66C 23/00, B66C 23/68, E04G 21/04, B66C 23/64, E02F 3/38

(54) **GROSSMANIPULATOR MIT GEWICHTSOPTIMIERTEM KNICKMAST**
LARGE MANIPULATOR HAVING A WEIGHT-OPTIMIZED ARTICULATED BOOM
MANIPULATEUR DE GRANDE DIMENSION À MÂT ARTICULÉ OPTIMISÉ EN TERMES DE POIDS

(30) Priorität: 12.07.2016 DE 102016112748
(43) Veröffentlichungstag der Anmeldung: 22.05.2019
(73) Patentinhaber: Schwing GmbH, 44653 Herne (DE)
(72) Erfinder: AKKOC, Murat, 44379 Dortmund (DE); OLEKSYUK, Mykola, 45527 Hattingen (DE); SEGSCHNEIDER, Bernd, 44227 Dortmund (DE)
(74) Vertreter: Schneiders & Behrendt PartmbB Rechtsanwälte - Patentanwälte
(86) Internationale Anmeldenummer: PCT/EP2017/067562
(87) Internationale Veröffentlichungsnummer: WO 2018/011271

(56) Entgegenhaltungen:
- CN-A- 101 666 162
- US-A1- 2006 021 264
- US-A1- 2009 223 093

## Beschreibung

Die Erfindung betrifft einen Großmanipulator mit einem ausfaltbaren Knickmast, der einen um eine Hochachse drehbaren Drehschemel und eine Mehrzahl von Mastsegmenten aufweist, wobei die Mastsegmente an Knickgelenken jeweils um Knickachsen gegenüber einem benachbarten Mastsegment oder dem Drehschemel verschwenkbar sind, wobei wenigstens ein Mastsegment durch eine hohle Struktur aus miteinander verbundenen Wandungselementen gebildet ist.

Die Entwicklung derartiger Großmanipulatoren unterliegt dem Zwang, wegen der wachsenden Anforderungen ständig größere Mastlängen vorzusehen, jedoch limitiert das Eigengewicht der Großmanipulatoren diese Bestrebungen.

Die US 2009/223093 A1 betrifft einen Tragarm für eine Arbeitsmaschine, beispielsweise einen Ausleger, oder Ausleger am Arbeitsgerät eines Baggers, mit mindestens einer Wand, die mindestens ein plattenförmiges Element aufweist, wobei das plattenförmige Element mindestens eine ebene Aussparung aufweist, die von einem dem plattenförmigen Element gegenüberliegenden dünnwandigen Abdeckelement abgedeckt ist.

Die US 2006/021264 A1 offenbart einen Ausleger für einen Bagger mit einem unteren Flansch, einem oberen Flansch, Seitenwänden sowie oberen und unteren Endbereichen mit verstärktem Profil. Die parallel verlaufenden Seitenwände sind durch Schweißen mit oberen und unteren verstärkten Profilendbereichen verbunden, die die zwischen den Endbereichen angeordneten Eckbereiche für den oberen Flansch und den unteren Flansch bilden.

Die CN 101 666 162 A betrifft einen ausfaltbaren Knickmast, der einen um eine Hochachse drehbaren Drehschemel und eine Mehrzahl von Mastsegmenten aufweist, wobei die Mastsegmente an Knickgelenken jeweils um Knickachsen gegenüber einem benachbarten Mastsegment oder dem Drehschemel verschwenkbar sind, wobei wenigstens ein Mastsegment durch eine hohle Struktur aus miteinander verbundenen Verbundelementen gebildet ist. Die zwei Seiten der vertikalen Verbundelemente sind mit einem Flansch versehen, der sich horizontal entlang des unteren und oberen Wandungselements zur Verbindung der Verbundelemente erstrecken.

Aus dem Stand der Technik ist es auch bekannt, fachwerkartige Strukturen an den Mastsegmenten der Großmanipulatoren vorzusehen, um das Gewicht zu reduzieren. Diese haben jedoch den Nachteil, dass sie eine offene Struktur ausbilden, sodass Schmutz und Wasser eindringen können und sich Wasser- oder Schmutzansammlungen an der Oberfläche bilden. Zudem lassen sich die Innenseiten der offenen Mastsegmente nur schwerlich auf Roststellen hin untersuchen, sodass eine Schwächung der Mastsegmente durch Rost oft nicht rechtzeitig erkannt wird. Ferner kann fest sitzender Schmutz innerhalb des Mastsegmentes zu einem erhöhten Gewicht führen, wodurch die Festigkeit und die Stabilität des Großmanipulators gefährdet werden.

Es ist aus dem Stand der Technik zudem bekannt die Mastsegmente aus Blechen unterschiedlicher, in der Regel mit zur Mastspitze abnehmender, Materialstärke zusammenzusetzen. Dies ist erforderlich, um das Lastmoment des Mastes möglichst gering zu halten, erfordert aber eine Vielzahl von Stumpfstössen bzw. Schweissverbindungen, die produktionstechnisch aufwändig sind. Zudem müssen insbesondere im Bereich der Mastspitze größere Materialstärken vorgesehen werden, um die Schweißbarkeit des Materials noch zu gewährleisten, obwohl aus konstruktiver Sicht auch geringere Materialstärken ausreichend wären. Hierdurch ist das Gewicht der Mastsegmente, insbesondere im kritischen Bereich der Mastspitze, aus statischer Sicht unnötig hoch.

Aufgabe der Erfindung ist es daher, einen Großmanipulator anzugeben, welcher die beschriebenen Nachteile behebt und eine einfache und sichere Gewichtsreduzierung ermöglicht.

Gelöst wird diese Aufgabe durch einen Großmanipulator mit den Merkmalen des Anspruchs 1.

Dadurch, dass in wenigstens eines der Wandungselemente eine Vertiefung eingebracht ist, wobei die Tiefe der Vertiefung geringer ist als die Materialstärke, also die Wandstärke des Wandungselementes, so dass das Wandungselement im Bereich der Vertiefung geschlossen ist, kann auf einfache aber sichere Art und Weise eine Gewichtsreduzierung erreicht werden. Die geschlossenen Wandungselemente bieten weiterhin Sicherheit gegen das Eindringen von Wasser und Schmutz, wobei die Vertiefung, welche in die Wandungselemente eingebracht ist, eine deutliche Gewichtsreduzierung ermöglicht.

Vorteilhafte Ausgestaltungen und Weiterbildungen der Erfindung ergeben sich aus den abhängigen Ansprüchen.

Gemäß einer vorteilhaften Ausgestaltung der Erfindung ist vorgesehen, dass die Vertiefung an der Innenseite des Wandungselementes angeordnet ist. Mit der Anordnung der Vertiefung an der Innenseite des Wandungselementes kann verhindert werden, dass sich Schmutz und Dreck an Kanten im Randbereich der Vertiefung anlagern und sich bedingt durch Feuchtigkeit dort Roststellen bilden.

Erfindungsgemäß vorgesehen ist, dass mehrere Vertiefungen an dem Wandungselement vorgesehen sind, die eine fachwerkartige Struktur mit Stegen und Fachflächen bilden, wobei die Fachflächen mindestens eine reduzierte Materialstärke aufweisen. Mit mehreren Vertiefungen, die eine fachwerkartige Struktur bilden, kann die Stabilität des Mastsegments erhalten bleiben, obwohl durch die Vertiefungen das Gewicht des Mastsegments deutlich reduziert ist. Für eine ausreichende Stabilität sorgen die Stege, die zusammen mit den Fachflächen die fachwerkartige Struktur ausbilden. Durch die reduzierte Materialstärke der Fachflächen kann auf einfache Art und Weise eine deutliche Gewichtsreduzierung erreicht werden. Die Fachflächen können sowohl eine einheitliche als auch eine voneinander abweichende Materialstärke aufweisen. Mit einer unterschiedlichen Materialstärke der einzelnen Fachflächen kann speziellen konstruktiven Gegebenheiten Rechnung getragen werden.

Eine bevorzugte Ausführung sieht vor, dass die Stege wenigstens bereichsweise die Materialstärke des Wandungselementes aufweisen. Indem die Stege bereichsweise die gleiche Materialstärke wie das Wandungselement aufweisen, ist eine einfache Möglichkeit gegeben, stabile Stege aus dem Vollmaterial der Wandungselemente herzustellen. Um das Gewicht weiter zu reduzieren, können jedoch einzelne Stege auch eine geringere Materialstärke aufweisen.

Besonders vorteilhaft ist die Weiterbildung, dass das wenigstens eine Mastsegment eine im Wesentlichen plane Außenseite aufweist. Durch die im Wesentlichen plane Außenseite des Mastsegments können Schmutz- und Wasseransammlungen an der äußeren Oberfläche vermieden werden. Dadurch, dass das Mastsegment kaum Kanten aufweist die zur Bildung von Roststellen beitragen könnten ist Langlebigkeit gewährleistet. Außerdem lässt sich die plane äußere Oberfläche gut reinigen.

Weiter vorteilhaft ist die Ausgestaltung, dass mehrere Vertiefungen auf den als Stegblechen ausgebildeten Wandungselementen des Mastsegments verteilt sind. Die Anordnung der Vertiefungen auf den Stegblechen des Mastsegments ermöglicht eine Gewichtsreduzierung, ohne dass die Stabilität und Festigkeit des Mastsegments beeinträchtigt wird.

In einer vorteilhaften Ausführungsform nehmen der spezifische Flächenanteil und/oder die relative Tiefe der Vertiefungen zur Spitze des Mastsegmentes hin, also in Richtung der Mastspitze, zu. Unter dem spezifischen Flächenanteil ist dabei der Anteil der resultierenden Fläche der Vertiefungen an der Fläche des Wandungselements pro Längeneinheit zu verstehen. Die relative Tiefe einer Vertiefung ist als das Verhältnis der Tiefe der Vertiefung zur Materialstärke des Wandungselements zu verstehen. Durch diese Anordnung bzw. Ausgestaltung der Vertiefung wird das Lastmoment zur Mastspitze hin verringert, ohne notwendigerweise Bleche unterschiedlicher Materialstärke verwenden zu müssen, so dass die Anzahl der Stumpfstöße reduziert werden kann.

Eine weitere vorteilhafte Ausführungsform der Erfindung sieht vor, dass wenigstens das letzte, die Mastspitze bildende Mastsegment Vertiefungen aufweist. Gewichtseinsparungen, insbesondere am letzten, die Mastspitze bildenden Mastsegment, auch Flieger genannt, ermöglichen eine Gewichtsreduzierung bei der Auslegung der anderen, davor angeordneten Mastsegmente des Großmanipulators. Mit jeder Gewichtseinsparung an der Mastspitze können die weiteren, die Mastspitze tragenden Mastsegmente leichter ausgestaltet werden.

Ferner ist es vorteilhaft, die Innenkante der Vertiefungen abgerundet auszubilden. Diese Form der Vertiefungen verringert lokale Spannungskonzentrationen in den Wandungselementen, so dass die Gefahr von Rissen reduziert wird.

Die Vertiefungen sind vorteilhafterweise umfänglich geschlossen ausgebildet. Dadurch ist gewährleistet, dass die Wandungselemente an den Randbereichen, an denen sie mit anderen Wandungselementen verschweisst werden, keine Vertiefungen aufweisen, die beim Verschweissen der Wandungselemente Schwierigkeiten bereiten können.

Vorteilhafterweise sind die Vertiefungen kaskadenförmig ausgestaltet, d.h. eine Vertiefung setzt sich aus Vertiefungen unterschiedlicher Tiefe zusammen, wodurch eine größere Gewichtseinsparung ohne signifikante Beeinträchtigung der Steifigkeit des Mastsegmentes erzielt werden kann.

Die Vertiefungen werden vorteilhafterweise durch Ausfräsen des Wandungselementes eingebracht sein. Das Ausfräsen ist eine einfache Art der Metallbearbeitung und mit geeigneten Fräsköpfen können beispielsweise Vertiefungen mit unterschiedlichen Randbereichen in einem Arbeitsgang eingebracht werden.

Die Vertiefungen können in einer alternativen Ausgestaltungsform auch durch Ätzen des Wandungselementes eingebracht werden. Mit heute bekannten und üblichen Ätztechniken kann die Tiefe der Vertiefung sehr individuell gestaltet werden.

Alternativ kann die Vertiefung des Mastsegmentes auch bei einem Wandungselement aus faserverstärkten Verbundmaterialien vorgesehen werden, welches aus einer Vielzahl von Faserlagen besteht. Die Vertiefung wird einfach gebildet, indem im Bereich der Vertiefung eine geringere Anzahl von Faserlagen vorgesehen wird.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen schematisch dargestellt und werden nachfolgend näher beschrieben. Es zeigen:
- Figur 1:: schematische Darstellung eines erfindungsgemäßen Großmanipulators;
- Figur 2:: schematische Darstellung eines erfindungsgemäßen Mastsegments;
- Figur 3:: schematische Darstellung einer weiteren Ausführungsform des erfindungsgemäßen Mastsegments;
- Figur 4:: schematische Schnittdarstellung durch ein erfindungsgemäßes Mastsegment.
- Figur 5a, 5b, 5c: schematische Schnittdarstellungen durch ein erfindungsgemäßes Wandungselement mit unterschiedlich gestalteten Vertiefungen
- Figur 6a: schematische Darstellung eines Mastsegmentes gemäß dem Stand der Technik
- Figur 6b: schematische Darstellung einer weiteren Ausführungsform des erfindungsgemäßen Mastsegmentes

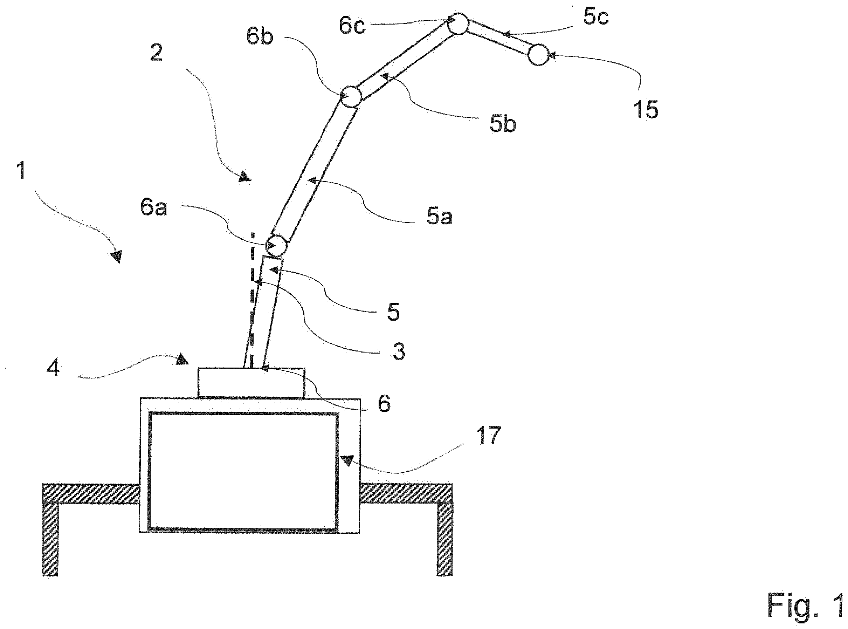

Die Darstellung gemäß Figur 1 zeigt einen Großmanipulator 1 für Autobetonpumpen mit ausfaltbarem Knickmast 2, der einen um eine Hochachse 3 drehbaren Drehschemel 4 und eine Mehrzahl von Mastsegmenten 5, 5a, 5b, 5c aufweist. Die Mastsegmente 5, 5a, 5b, 5c sind an Knickgelenken 6, 6a, 6b, 6c jeweils um Knickachsen gegenüber einem benachbarten Mastsegment 5, 5a, 5b, 5c oder dem Drehschemel 4 mittels je eines (nicht dargestellten) Antriebsaggregates verschwenkbar. Über (nicht dargestellte) Beton-Förderleitungen wird mithilfe des Großmanipulators 1 der flüssige Beton von der Betonpumpe 17 zur Mastspitze 15 gefördert, wo die Beton-Förderleitung in einem Endschlauch (nicht dargestellt) endet, sodass beim Betonieren mit einer solchen Autobetonpumpe große Distanzen und Höhen mittels des Großmanipulators 1 überbrückt werden können.

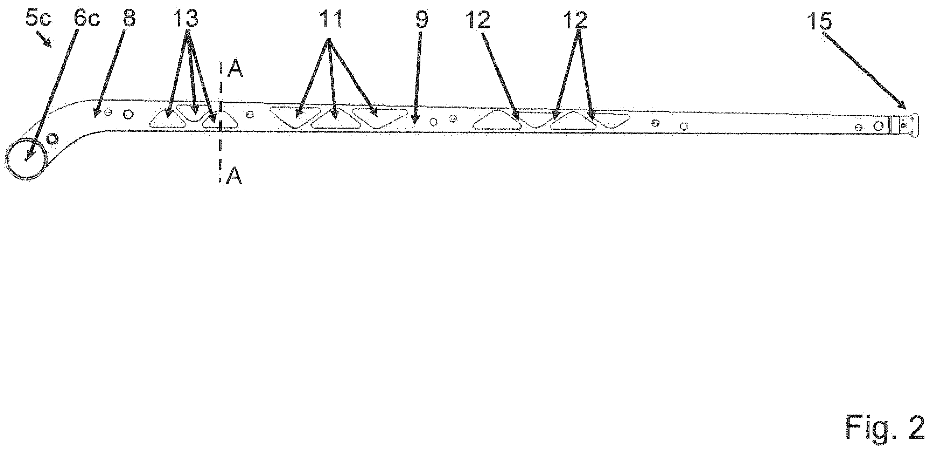

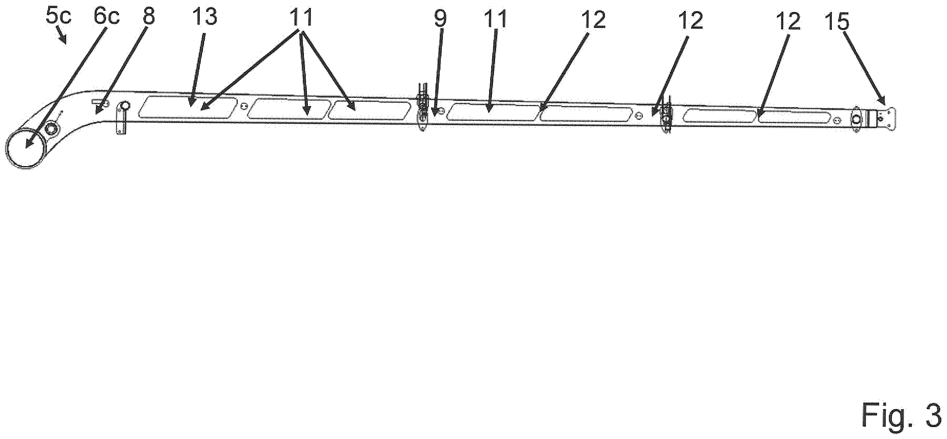

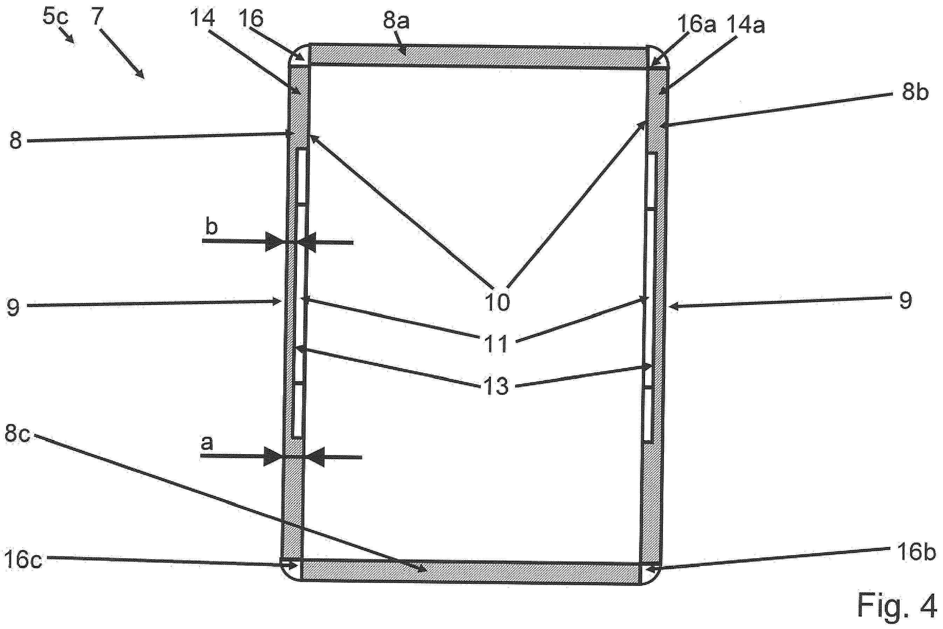

Die Figur 2 zeigt schematisch dargestellt das letzte, die Mastspitze 15 bildende Mastsegment 5c mit Vertiefungen 11 in dem seitlichen Wandungselement 8. Speziell an diesem Mastsegment 5c haben die Vertiefungen 11 eine besonders vorteilhafte Wirkung, da jede Gewichtsreduzierung an diesem Mastsegment 5c eine Gewichtsreduzierung bei der Auslegung der anderen, davor angeordneten Mastsegmente 5, 5a, 5b (Figur 1) des Großmanipulators 1 ermöglicht. Die Vertiefungen 11 sind auch an den anderen Mastsegmenten 5, 5a, 5b möglich und vorteilhaft auch dort vorgesehen. In das Wandungselement 8 sind mehrere Vertiefungen 11 eingebracht, wobei die Tiefe der Vertiefungen 11 geringer ist als die Materialstärke des Wandungselementes 8, sodass das Wandungselement 8 im Bereich der Vertiefungen 11 geschlossen ist. Daher sind die in Figur 2 und 3 dargestellten Vertiefungen 11 nur angedeutet und erfindungsgemäß von außen nicht sichtbar. Die Außenseite 9 des Mastsegments 5c ist im Wesentlichen plan ausgestaltet. Hierdurch kann sich Schmutz und Feuchtigkeit nicht an Kanten auf der Außenseite 9 halten. Durch fehlende Kanten an der Außenseite 9 kann zudem die Bildung von Rost wirksam vermieden werden. Die Ausgestaltung der Vertiefungen 11 wird auch aus der Schnittdarstellung gemäß Figur 4 durch die eingezeichnete Schnittebene A - A deutlich. Das Mastsegment 5c weist mehrere Vertiefungen 11 an dem Wandungselement 8 auf, die eine fachwerkartige Struktur mit Stegen 12 und Fachflächen 13 bilden. Hierbei weisen die Fachflächen 13 eine reduzierte Materialstärke auf, während die Stege 12 die Materialstärke des Wandungselementes 8 aufweisen. Zur Gewährleistung der Stabilität sind die Stege 12 z.B., wie dargestellt, in dreieckiger Konfiguration ausgebildet, d.h. die Stege 12 schließen jeweils eine dreieckige Fachfläche 13 bzw. Vertiefung 11 ein.

Die dreieckigen Fachflächen 13 sind in den Ecken zweckmäßig abgerundet um Spannungskonzentrationen in den Ecken der Vertiefungen 11 zu reduzieren.

Die Figur 3 zeigt schematisch eine andere Ausgestaltung eines erfindungsgemäßen Mastsegmentes 5c. Die Fachflächen 13 der Vertiefungen 11 haben hier eine andere Form als in Figur 2 und sind parallelogrammförmig ausgestaltet, wobei die durch die Vertiefungen 11 gebildeten Fachflächen 13 und Stege 12 weiterhin eine fachwerkartige Struktur bilden.

Zu beachten ist, dass in beiden Ausführungen sowohl in Figur 2 als auch in Figur 3 vorteilhalfterweise keine Vertiefungen 11 im Bereich von Schweißnähten 16, 16a, 16b, 16c (Figur 4) vorgesehen sind. Zudem werden im Bereich der Knickgelenke 6, 6a, 6b, 6c keine Vertiefungen 11 angeordnet. Auch an den Anlenkpunkten für die Antriebsaggregate werden keine Vertiefungen 11 angeordnet, um das Mastsegment 5c an diesen Stellen nicht zu schwächen.

Die Vertiefungen 11 können alternativ beispielsweise auch rund, rechteckig, trapezförmig oder dreieckig ausgebildet sein. Vorteilhafterweise wird eine umfänglich geschlossene Form für die Vertiefungen 11 gewählt, so dass die Vertiefungen 11, wie oben beschrieben, so angeordnet werden können, dass im Bereich der Schweißnähte 16, 16a, 16b, 16c keine Vertiefungen 11 vorgesehen sind.

Figur 4 zeigt schematisch eine Schnittdarstellung durch die Schnittebene A - A gemäß Figur 2. Diese Schnittdarstellung soll die Ausgestaltung der Vertiefungen 11 (Figur 2 und 3) näher erläutern. Wie zu erkennen ist, bildet das Mastsegment 5c eine hohle, kastenförmige Struktur aus miteinander verbundenen Wandungselementen 8, 8a, 8b, 8c. Die Wandungselemente 8, 8a, 8b, 8c sind über Schweißnähte 16, 16a, 16b, 16c miteinander verbunden. Die in die seitlichen Stegbleche 14, 14a eingebrachten Vertiefungen 11 sparen den Bereich der Schweißnähte 16, 16a, 16b, 16c aus, sodass die Schweißbarkeit der Wandungselemente 8, 8a, 8b, 8c durch die Vertiefungen 11 nicht beeinträchtigt ist. Die Vertiefungen 11 sind an der Innenseite 10 der Wandungselemente 8, 8b eingebracht und weisen eine Tiefe auf, die geringer ist als die Materialstärke a der Wandungselemente 8, 8b. Zu erkennen ist, dass die Wandungselemente 8, 8b im Bereich der Vertiefungen 11 geschlossen sind. Hierdurch reduzieren die Vertiefungen 11 die Materialstärke der Wandungselemente 8, 8b, sodass diese im Bereich der Fachflächen 13 eine reduzierte Materialstärke b aufweisen. Die Außenseiten 9 des Mastsegments 5c, d.h. dessen äußere Oberflächen, sind im Wesentlichen plan ausgebildet. In dem in Figur 4 dargestellten Ausführungsbeispiel weisen lediglich die als Stegbleche 14, 14a ausgebildeten seitlichen Wandungselemente 8, 8b des Mastsegments 5c Vertiefungen 11 auf. Die Materialstärke b im Bereich der Vertiefungen 11 beträgt vorzugsweise ca. 1 mm, um noch eine ausreichende Festigkeit zum Beispiel gegenüber Schlägen auf das Mastsegment 5c, zu gewährleisten. Bei einer Materialstärke a von beispielsweise 3 mm am letzten Mastsegment 5c ergibt sich damit eine Verringerung der Materialstärke, und damit des Gewichtes im Bereich der Vertiefungen 11, in der Größenordnung von ca. 70%. Bei Blechen mit größerer Materialstärke kann im Bereich der Vertiefungen 11 sogar eine Verringerung der Materialstärke um 90% und mehr erzielt werden.

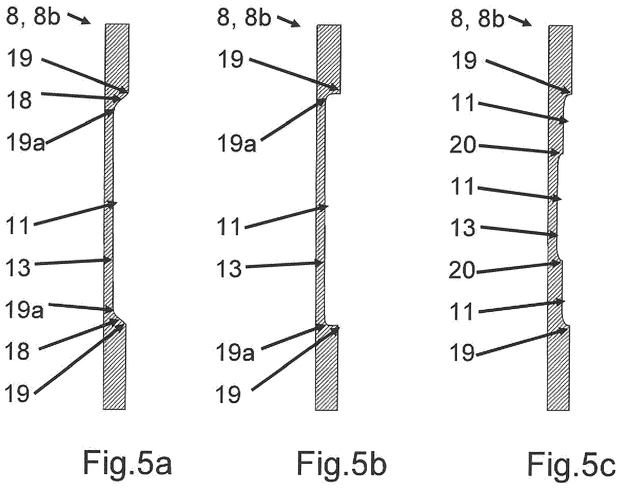

Die Figuren 5a, 5b und 5c zeigen Schnittdarstellungen eines erfindungsgemäßen Wandungselementes 8, 8b mit unterschiedlichen Ausgestaltungen der Vertiefung 11. In der Figur 5a ist der Randbereich der Vertiefung 11 mit einer Abschrägung 18 versehen und die obere Kante 19 und die untere bzw. innere Kante 19a der Vertiefung 11 ist abgerundet. Diese Form der Kanten 19, 19a und der Abschrägung 18 ist in Hinblick auf die Reduzierung lokaler Spannungskonzentrationen besonders vorteilhaft, aber produktionstechnisch aufwändiger.

Bei der Ausgestaltung des Randbereiches der Vertiefung 11 gemäß Figur 5b ist nur eine Abrundung an der unteren bzw. inneren Kante 19a der Vertiefung 11 vorgesehen. Durch diese Maßnahme werden die Spannungen im Randbereich der Vertiefung 11 gegenüber einem winkligen Übergang schon erheblich reduziert. Vorteilhafterweise liegt der Radius der Rundung im Bereich von 30 - 100 % der Blechdicke.

Die Figur 5c zeigt eine weitere Variante, in der die Vertiefung 11 kaskadenförmig, also abgestuft durch mindestens eine Stufe 20, ausgeführt ist, wodurch sich weitere Möglichkeiten ergeben, das Gewicht der Mastsegmente 5, 5a, 5b, 5c unter Beibehaltung hoher Steifigkeit zu reduzieren.

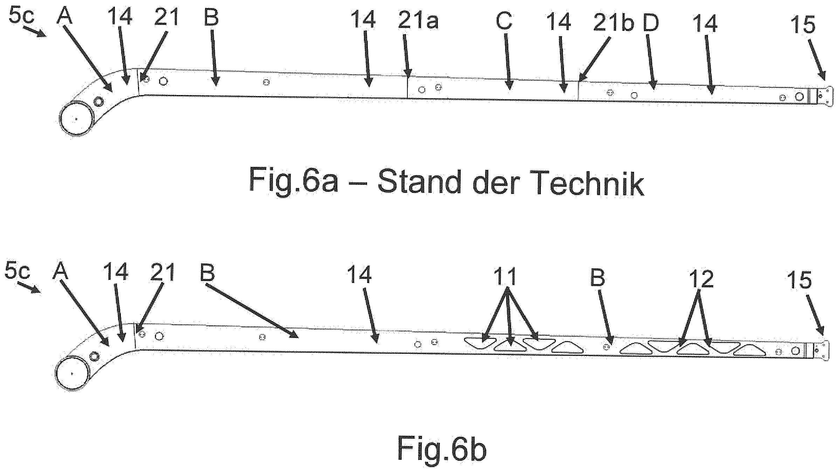

Die Figur 6a zeigt eine schematische Seitenansicht eines Mastsegmentes 5c gemäß dem Stand der Technik. Diese Figur zeigt ein seitlich angeordnetes Stegblech 14 das aus Blechen unterschiedlicher Materialstärke zusammengesetzt ist. Im Bereich A weist das Stegblech beispielsweise eine Materialstärke von 8 mm auf, im Bereich B 5 mm, im Bereich C 4mm und im Bereich D 3 mm. Die Bleche der Bereiche A, B, C und D sind durch Stumpfstöße 21, 21a, 21b bzw. Schweißnähte 21, 21a, 21b untereinander verbunden. Im Bereich der Anlenkungen können weitere (nicht dargestellte) Vertiefungen 11 angebracht sein, um das Mastsegment 5c an diesen Stellen zu verstärken.

In der Figur 6b ist eine vorteilhafte Anordnung der Vertiefungen 11 dargestellt, bei welcher der spezifische Flächenanteil der Vertiefungen 11 zur Spitze des Mastsegmentes, also in Richtung Mastspitze 15, hin zunimmt. Die Anzahl der Bleche mit unterschiedlichen Materialstärken und die Anzahl der Stumpfstöße 21, 21a, 21b werden durch diese Maßnahme reduziert. Dies wird erreicht, indem, wie hier beispielsweise gezeigt, nur noch zwei Bleche mit den Materialstärken 8 mm (Bereich A) und 5 mm (Bereich B) verwendet werden und die Anzahl der Vertiefungen 11 zur Mastspitze 15 hin zunimmt. Dadurch ist gewährleistet, dass das spezifische Gewicht des Stegbleches 14 zur Mastspitze 15 hin abnimmt und gleichzeitig die Anzahl der Stumpfstöße 21 reduziert wird, denn in dem Beispiel gemäß Figur 6b ist nur noch ein Stumpfstoß 21 zwischen den Abschnitten A und B notwendig. In ähnlicher Weise kann bei gleichmäßiger Verteilung, aber größer werdender Fläche der einzelnen Vertiefungen 11 zur Mastspitze 15 hin, eine Gewichtsabnahme in Richtung der Mastspitze 15 realisiert werden. Ein vergleichbarer Vorteil lässt sich erzielen, indem die Vertiefungen 11 zwar gleichmäßig über die Länge des Stegblechs 14 angeordnet werden, aber die relative Tiefe der Vertiefungen 11 zur Mastspitze 15 hin zunimmt.

Die oben stehenden Überlegungen zu der Verwendung von Vertiefungen 11 im Bereich der Stegbleche 14 gelten in gleicher Weise auch für die oben und unten an den Mastsegmenten 5, 5a, 5b, 5c angeordneten, als Gurtblech ausgebildeten, Wandungselemente 8a, 8c.

Die Vertiefungen 11 können beispielsweise durch das Ausfräsen des Vollmaterials des Wandungselementes 8, 8a, 8b, 8c in das Wandungselement 8, 8a, 8b, 8c eingebracht, d.h. die Vertiefungen 11 sind als Ausfräsungen ausgebildet. Durch das Ausfräsen kann mit heutiger Technologie die Materialstärke des Wandungselementes 8, 8a, 8b, 8c des Fliegers von 3mm auf 1-2 mm variabel reduziert werden, wodurch eine beachtliche Gewichtsersparnis erzielt wird. Mit geeigneten Fräsköpfen, die seitlich abgeschrägt oder abgerundet sind, lassen sich insbesondere die weiter oben beschriebenen Abschrägungen und/oder Abrundungen des Randbereiches der Vertiefung 11 in einem Arbeitsgang realisieren.

Alternativ zum Ausfräsen bietet sich beispielsweise an, die Vertiefung 11 durch Ätzen in das Wandungselement 8, 8a, 8b, 8c einzubringen. Zur Vorbereitung des Ätzvorgange wird das Wandungselement 8, 8a, 8b, 8c zunächst in den Bereichen, in denen keine Vertiefung 11 entstehen soll, ein Material, z.B. ein Lack, das gegen die Ätzflüssigkeit resistent ist, aufgetragen. Danach wird das Wandungselement 8, 8a, 8b, 8c in eine Ätzflüssigkeit getaucht bis die gewünschte Tiefe der Vertiefung 11 erreicht ist. In mehreren Arbeitsgängen lässt sich mit diesem Verfahren auch eine gestufte Vertiefung 11, wie oben beschreiben, einfach erstellen.

Weiter alternativ lässt sich eine Vertiefung 11 auch durch Laserabtragung, Sandstrahlen, Kalt- oder Warmumformung (d.h. Pressen oder Schmieden) oder andere geeignete Verfahren in das Wandungselement 8, 8a, 8b, 8c einbringen.

Grundsätzlich ist es auch möglich, ein Wandungselement 8, 8a, 8b, 8c zu verwenden, dessen Wandstärke zunächst der Stärke der vorgesehenen Vertiefung 11 entspricht. Durch Aufschweißen von Material lassen sich die oben beschriebenen Stege und Randbereiche erstellen, wodurch letztendlich die Vertiefung 11 in dem Wandungselement 8, 8a, 8b, 8c entsteht.

Ebenso ist die Herstellung eines Wandungselementes 8, 8a, 8b, 8c mit einer Vertiefung 11 im 3D-Druckverfahren möglich.

Die Vertiefungen 11 können vorteilhafterweise nicht nur bei Mastsegmenten 8, 8a, 8b, 8c aus Stahl oder anderen metallischen Werkstoffen eingesetzt werden, sondern z.B. auch bei Mastsegmenten aus faserverstärkten Kunststoffen, wie sie beispielsweise bei Autobetonpumpen mit sogenannten Carbonmasten verwendet werden. Ein faserverstärkter Kunststoff (oder auch Faser-Kunststoff-Verbund oder Faserverbundkunststoff) ist ein Werkstoff, bestehend aus Verstärkungsfasern und einer Kunststoffmatrix. Die Matrix umgibt die Fasern, die durch Adhäsiv- oder Kohäsivkräfte an die Matrix gebunden sind.

Für die Herstellung eines Wandungselementes 8, 8a, 8b, 8c aus faserverstärktem Kunststoff wird üblicherweise eine Vielzahl von dünnen, gewebten Matten (ca. 10-50 Lagen) aus Verstärkungsfasern übereinandergelegt. Zur Ausbildung der Vertiefungen (11) reicht es prinzipiell aus, im Bereich der Vertiefungen 11 eine geringere Anzahl von Lagen aus Verstärkungsfasern vorzusehen. Durch eine geschickte Wahl der Grunddicke der Wandungselemente, die durch die Anzahl der aufgebrachten Lagen bestimmt wird und die Tiefe der Vertiefungen 11, insbesondere in Verbindung mit den oben beschriebenen vorteilhaften, z.B. fachwerkartigen Anordnungen der Vertiefungen 11, lässt sich auch bei derartigen Masten eine nicht unerhebliche Gewichtsersparnis realisieren. Insbesondere bei der oben beschriebenen fachwerkartigen Struktur der Wandungselemente mit mehreren Vertiefungen 11 und den dazwischenliegenden Stegen 12 ist es besonders vorteilhaft, die Fasern für die Stege 12 parallel zu der Längsrichtung der Stege 12 auszurichten, damit die Stege 12 die eingeleiteten Kräfte optimal aufnehmen können.

### Bezugszeichenliste

- 1: Großmanipulator
- 2: Knickmast
- 3: Hochachse
- 4: Drehschemel
- 5 5a, 5b, 5c: Mastsegmente
- 6 6a, 6b, 6c: Knickgelenke
- 7: Hohle Struktur
- 8 8a, 8b, 8c: Wandungselemente
- 9: Außenseite
- 10: Innenseite
- 11: Vertiefungen
- 12: Stege
- 13: Fachflächen
- 14: 14a Stegblech
- 15: Mastspitze
- 16 16a, 16b, 16c: Schweißnähte
- 17: Betonpumpe
- 18: Abschrägung
- 19: 19a Kante
- 20: Stufe
- 21 21a, 21 b: Stumpfstöße
- a: reguläre Materialstärke
- b: reduzierte Materialstärke
- A, B, C, D: Blechbereiche

## Patentansprüche

1. Großmanipulator (1) mit einem ausfaltbaren Knickmast (2), der einen um eine Hochachse (3) drehbaren Drehschemel (4) und eine Mehrzahl von Mastsegmenten (5, 5a, 5b, 5c) aufweist, wobei die Mastsegmente (5, 5a, 5b, 5c) an Knickgelenken (6, 6a, 6b, 6c) jeweils um Knickachsen gegenüber einem benachbarten Mastsegment (5, 5a, 5b, 5c) oder dem Drehschemel (4) verschwenkbar sind, wobei wenigstens ein Mastsegment (5, 5a, 5b, 5c) durch eine hohle Struktur (7) aus miteinander verbundenen Wandungselementen (8, 8a, 8b, 8c) gebildet ist,
wobei in wenigstens eines der Wandungselemente (8, 8a, 8b, 8c) eine Vertiefung (11) eingebracht ist, wobei die Tiefe der Vertiefung (11) geringer ist als die Materialstärke des Wandungselementes (8, 8a, 8b, 8c), so dass das Wandungselement (8, 8a, 8b, 8c) im Bereich der Vertiefung (11) geschlossen ist, **dadurch gekennzeichnet, dass** mehrere Vertiefungen (11) an dem Wandungselement (8, 8a, 8b, 8c) vorgesehen sind, die eine fachwerkartige Struktur mit Stegen (12) und Fachflächen (13) bilden, wobei die Fachflächen (13) eine reduzierte Materialstärke (b) der Wandungselemente (8, 8a, 8b, 8c) aufweisen.

2. Großmanipulator nach Anspruch 1, **dadurch gekennzeichnet, dass** die Vertiefung (11) an der Innenseite des Wandungselementes (8, 8a, 8b, 8c) angeordnet ist.

3. Großmanipulator (1) nach Anspruch 1 oder 2, **dadurch gekennzeichnet, dass** die Stege (12) wenigstens bereichsweise die Materialstärke (a) des Wandungselementes (8, 8a, 8b, 8c) aufweisen.

4. Großmanipulator (1) nach einem der Ansprüche 1 bis 3, **dadurch gekennzeichnet, dass** das wenigstens eine Mastsegment (5, 5a, 5b, 5c) eine im Wesentlichen plane Außenseite (9) aufweist.

5. Großmanipulator (1) nach einem der Ansprüche 1 bis 4, **dadurch gekennzeichnet, dass** mehrere Vertiefungen (11) auf den als Stegblechen (14, 14a) ausgebildeten Wandungselementen (8, 8a, 8b, 8c) des Mastsegments (5, 5a, 5b, 5c) verteilt sind.

6. Großmanipulator (1) nach einem der Ansprüche 1 bis 5, **dadurch gekennzeichnet, dass** ein spezifischer Flächenanteil und/oder eine relative Tiefe der Vertiefungen (11) zur Spitze des Mastsegmentes (5, 5a, 5b, 5c) hin zunehmen.

7. Großmanipulator (1) nach einem der Ansprüche 1 bis 6, **dadurch gekennzeichnet, dass** wenigstens das letzte, die Mastspitze (15) bildende Mastsegment (5c) Vertiefungen (11) aufweist.

8. Großmanipulator (1) nach einem der Ansprüche 1 bis 7, **dadurch gekennzeichnet, dass** die Innenkanten (19a) der Vertiefungen (11) abgerundet ausgebildet sind.

9. Großmanipulator (1) nach einem der Ansprüche 1 bis 8, **dadurch gekennzeichnet, dass** die Vertiefungen (11) umfänglich geschlossen ausgebildet sind.

10. Großmanipulator (1) nach einem der Ansprüche 1 bis 9, **dadurch gekennzeichnet, dass** die Vertiefungen (11) kaskadenförmig ausgestaltet sind.

11. Großmanipulator (1) nach einem der Ansprüche 1 bis 10, **dadurch gekennzeichnet, dass** die Vertiefung (11) durch Ausfräsen des Wandungselementes (8, 8a, 8b, 8c) eingebracht ist.

12. Großmanipulator (1) nach einem der Ansprüche 1 bis 10, **dadurch gekennzeichnet, dass** die Vertiefung (11) durch Ätzen des Wandungselementes (8, 8a, 8b, 8c) eingebracht ist.

13. Großmanipulator (1) nach einem der Ansprüche 1 bis 10, **dadurch gekennzeichnet, dass** das Wandungselement (8, 8a, 8b, 8c) aus einem faserverstärkten Verbundmaterial mit einer Vielzahl von Faserlagen besteht und die Vertiefung (11) durch eine geringere Anzahl von Faserlagen im Bereich der Vertiefung (11) gebildet ist.

## Claims

1. Large manipulator (1) comprising a fold-out articulated boom (2), which comprises a turntable (4) rotatable about a vertical axis (3) and a plurality of boom segments (5, 5a, 5b, 5c), wherein the boom segments (5, 5a, 5b, 5c) each are pivotable at articulation joints (6, 6a, 6b, 6c) about articulation axes relative to an adjacent boom segment (5, 5a, 5b, 5c) or to the turntable (4), wherein at least one boom segment (5, 5a, 5b, 5c) is formed by a hollow structure (7) from interconnected wall elements (8, 8a, 8b, 8c), wherein a depression (11) is made in at least one of the wall elements (8, 8a, 8b, 8c), the depth of the depression (11) being less than the material thickness of the wall element (8, 8a, 8b, 8c), such that the wall element (8, 8a, 8b, 8c) is closed in the region of the depression (11), **characterised in that** a plurality of depressions (11) are provided on the wall element (8, 8a, 8b, 8c), which form a truss-like structure comprising struts (12) and pocket surfaces (13), the pocket surfaces (13) having a reduced material thickness (b) of the wall elements (8, 8a, 8b, 8c).

2. Large manipulator according to claim 1, **characterised in that** the depression (11) is arranged on the inner side of the wall element (8, 8a, 8b, 8c).

3. Large manipulator (1) according to claim 1 or 2, **characterised in that** the struts (12) have the material thickness (a) of the wall element (8, 8a, 8b, 8c) at least in regions.

4. Large manipulator (1) according to any of claims 1 to 3, **characterised in that** the at least one boom segment (5, 5a, 5b, 5c) has a substantially planar outer side (9).

5. Large manipulator (1) according to any of claims 1 to 4, **characterised in that** a plurality of depressions (11) are distributed over the wall elements (8, 8a, 8b, 8c) of the boom segment (5, 5a, 5b, 5c), which elements are designed as strut plates (14, 14a).

6. Large manipulator (1) according to any of claims 1 to 5, **characterised in that** a specific surface area and/or a relative depth of the depressions (11) increases towards the tip of the boom segment (5, 5a, 5b, 5c).

7. Large manipulator (1) according to any of claims 1 to 6, **characterised in that** at least the last boom segment (5c) forming the boom tip (15) comprises depressions (11).

8. Large manipulator (1) according to any of claims 1 to 7, **characterised in that** the inner edges (19a) of the depressions (11) are rounded.

9. Large manipulator (1) according to any of claims 1 to 8, **characterised in that** the depressions (11) are closed at the periphery.

10. Large manipulator (1) according to any of claims 1 to 9, **characterised in that** the depressions (11) are cascaded.

11. Large manipulator (1) according to any of claims 1 to 10, **characterised in that** the depression (11) is made by milling out the wall element (8, 8a, 8b, 8c).

12. Large manipulator (1) according to any of claims 1 to 10, **characterised in that** the depression (11) is made by etching the wall element (8, 8a, 8b, 8c).

13. Large manipulator (1) according to any of claims 1 to 10, **characterised in that** the wall element (8, 8a, 8b, 8c) consists of a fibre-reinforced composite material comprising a plurality of fibre layers and the depression (11) is formed by a lower number of fibre layers in the region of the depression (11).

## Revendications

1. Manipulateur de grande taille (1) avec un mât articulé (2) pouvant être déplié, qui présente un tabouret rotatif (4) pouvant tourner autour d'un axe vertical (3) et une multitude de segments de mât (5, 5a, 5b, 5c), dans lequel les segments de mât (5, 5a, 5b, 5c) peuvent pivoter au niveau de joints articulés (6, 6a, 6b, 6c) respectivement autour d'axes d'articulation par rapport à un segment de mât (5, 5a, 5b, 5c) adjacent ou au tabouret rotatif (4), dans lequel au moins un segment de mât (5, 5a, 5b, 5c) est formé par une structure (7) creuse composée d'éléments de paroi (8, 8a, 8b, 8c) reliés les uns aux autres, dans lequel un renfoncement (11) est pratiqué dans au moins un des éléments de paroi (8, 8a, 8b, 8c), dans lequel la profondeur du renfoncement (11) est inférieure à l'épaisseur de matériau de l'élément de paroi (8, 8a, 8b, 8c) de sorte que l'élément de paroi (8, 8a, 8b, 8c) est fermé dans la zone du renfoncement (11), **caractérisé en ce que** plusieurs renfoncements (11) sont prévus au niveau de l'élément de paroi (8, 8a, 8b, 8c), qui forment une structure de type charpente avec des entretoises (12) et des clayettes (13), dans lequel les clayettes (13) présentent une épaisseur de matériau (b) réduite des éléments de paroi (8, 8a, 8b, 8c).

2. Manipulateur de grande taille selon la revendication 1, **caractérisé en ce que** le renfoncement (11) est disposé au niveau du côté intérieur de l'élément de paroi (8, 8a, 8b, 8c).

3. Manipulateur de grande taille (1) selon la revendication 1 ou 2, **caractérisé en ce que** les entretoises (12) présentent au moins par endroits l'épaisseur de matériau (a) de l'élément de paroi (8, 8a, 8b, 8c).

4. Manipulateur de grande taille (1) selon l'une quelconque des revendications 1 à 3, **caractérisé en ce que** l'au moins un segment de mât (5, 5a, 5b, 5c) présente un coté extérieur (9) sensiblement plan.

5. Manipulateur de grande taille (1) selon l'une quelconque des revendications 1 à 4, **caractérisé en ce que** plusieurs renfoncements (11) sont répartis sur les éléments de paroi (8, 8a, 8b, 8c), réalisés en tant que tôles d'entretoise (14, 14a), du segment de mât (5, 5a, 5b, 5c).

6. Manipulateur de grande taille (1) selon l'une quelconque des revendications 1 à 5, **caractérisé en ce qu'**une fraction de surface spécifique et/ou une profondeur relative des renfoncements (11) augmentent en direction de la pointe du segment de mât (5, 5a, 5b, 5c).

7. Manipulateur de grande taille (1) selon l'une quelconque des revendications 1 à 6, **caractérisé en ce qu'**au moins le dernier segment de mât (5c) formant la pointe de mât (15) présente des renfoncements (11).

8. Manipulateur de grande taille (1) selon l'une quelconque des revendications 1 à 7, **caractérisé en ce que** les arêtes intérieures (19a) des renfoncements (11) sont réalisées de manière arrondie.

9. Manipulateur de grande taille (1) selon l'une quelconque des revendications 1 à 8, **caractérisé en ce que** les renfoncements (11) sont réalisés de manière fermée en périphérie.

10. Manipulateur de grande taille (1) selon l'une quelconque des revendications 1 à 9, **caractérisé en ce que** les renfoncements (11) sont réalisés en cascade.

11. Manipulateur de grande taille (1) selon l'une quelconque des revendications 1 à 10, **caractérisé en ce que** le renfoncement (11) est pratiqué par fraisage de l'élément de paroi (8, 8a, 8b, 8c).

12. Manipulateur de grande taille (1) selon l'une quelconque des revendications 1 à 10, **caractérisé en ce que** le renfoncement (11) est pratiqué par gravure de l'élément de paroi (8, 8a, 8b, 8c).

13. Manipulateur de grande taille (1) selon l'une quelconque des revendications 1 à 10, **caractérisé en ce que** l'élément de paroi (8, 8a, 8b, 8c) est constitué d'un matériau composite renforcé par des fibres avec une pluralité de couches de fibres et le renfoncement (11) est formé par un nombre inférieur de couches de fibres dans la zone du renfoncement (11).
